**Europäisches Patentamt**

**European Patent Office**

**Office européen des brevets**

(19)

(11) Veröffentlichungsnummer: **0 217 054
B1**

(12)

# EUROPÄISCHE PATENTSCHRIFT

(45) Veröffentlichungstag der Patentschrift:
**19.07.89**

(21) Anmeldenummer: **86110521.1**

(22) Anmeldetag: **30.07.86**

(51) Int. Cl.⁴: **G01J 3/02, G02B 27/14,
G01J 1/36, G01N 21/25**

(54) **Verfahren und Vorrichtung zur Spektralphotometrie.**

(30) Priorität: **30.08.85 CH 3753/85**

(43) Veröffentlichungstag der Anmeldung:
**08.04.87 Patentblatt 87/15**

(45) Bekanntmachung des Hinweises auf die Patenterteilung:
**19.07.89 Patentblatt 89/29**

(84) Benannte Vertragsstaaten:
**CH DE FR GB IT LI NL**

(56) Entgegenhaltungen:
**EP-A- 0 067 574
US-A- 3 794 407**

(73) Patentinhaber: **KONTRON-HOLDING AG, Bernerstrasse
Süd 169, CH-8048 Zürich(CH)**

(72) Erfinder: **Wiget, Peter, Dr., Dorfhaldenweg 7,
CH-6403 Küssnacht(CH)**
Erfinder: **Wolf, Robert, Dr., Imfangstrasse 6,
CH-6005 Luzern(CH)**

(74) Vertreter: **Körber, Wolfhart, Dr. et al, Patentanwälte
Dipl.-Ing. H. Mitscherlich Dipl.-Ing. K. Gunschmann
Dr.rer.nat. W. Körber Dipl.Ing. J. Schmidt-Evers Dipl.-Ing.
W. Melzer Steinsdorfstrasse 10, D-8000 München 22(DE)**

## Beschreibung

Die Erfindung betrifft ein Verfahren zur Spektralphotometrie, bei dem ein von einer Lichtquelle kommender und in einem Monochromator dispergierter Lichtstrahl durch einen Strahlteiler in einen ersten, entlang der optischen Achse durch eine Messzelle zu einem Detektor geführten Messstrahl und einen zweiten, in der durch die Dispersion gebildeten optischen Ebene um einen Winkel α zur optischen Achse zu einem Referenzdetektor geführten Referenzstrahl aufgeteilt wird.

Die Erfindung betrifft ferner ein Spektralphotometer mit einem Gittermonochromator und einem Strahlteiler, der um einen in der optischen Ebene liegenden Winkel α/2 bezüglich der optischen Achse gedreht ist.

Spektralphotometer, die nach diesem Prinzip arbeiten, sind bekannt und werden als Zweistrahl-Spektralphotometer oder Zweistrahl-Spektrometer bezeichnet. Um ein Spektrum mit hoher Auflösung des Signals bestimmen zu können, sollte die Basislinie des Gerätes möglichst flach sein. Dies bedingt, dass die spektralen Intensitätsverteilungen von Mess- und Referenzstrahlengang einen nahezu gleichen Verlauf aufweisen, was jedoch bekanntlich nicht der Fall ist. In gewissen Wellenlängenbereichen treten starke Intensitätsschwankungen auf, die mit mehr oder weniger grossem elektronischem Aufwand korrigiert werden müssen. Diese Schwankungen werden zu einem wesentlichen Teil auf Polarisationseffekte des Gitters im Monochromator und des Strahlteilers zurückgeführt.

Der Erfindung liegt die Aufgabe zugrunde, ein verbessertes Zweistrahl-Spektralphotometer anzugeben, bei dem das Problem der spektralen Intensitätsveränderungen verringert ist.

Gemäss der vorliegenden Erfindung wird dies dadurch erreicht, dass die Ablenkung des Referenzstrahls durch den Strahlteiler zusätzlich um einen Winkel β aus der durch die Dispersion gebildeten Ebene heraus erfolgt.

In einem dafür geeigneten, erfindungsgemässen Spektralphotometer ist der Strahlteiler zusätzlich um einen entsprechenden Winkel gegenüber der zur genannten Ebene senkrechten Richtung geneigt.

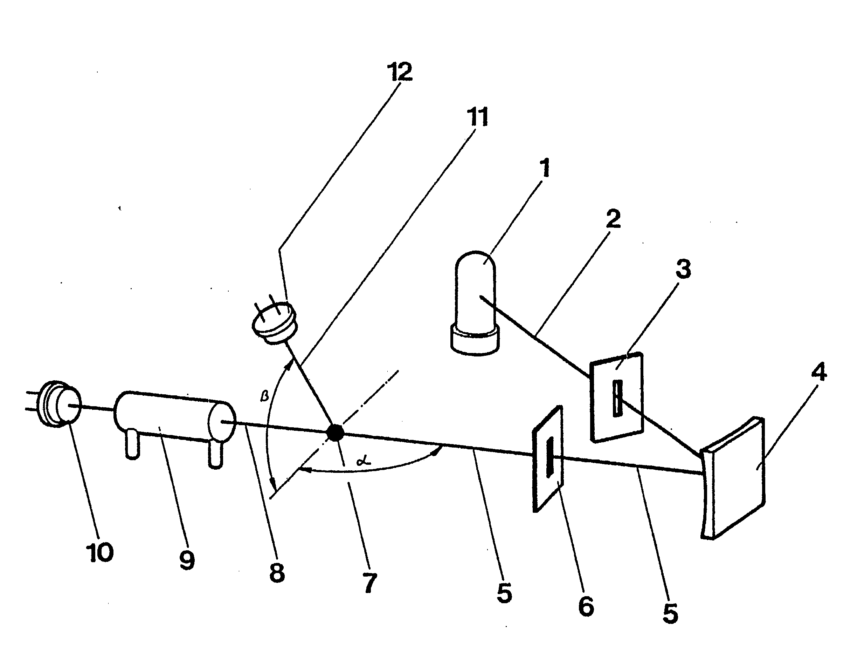

Im Folgenden wird anhand der beiliegenden Zeichnung ein Ausführungsbeispiel der Erfindung beschrieben. Die Zeichnung zeigt eine schematische, perspektivische Darstellung der wesentlichen Elemente eines Spektralphotometers nach der Erfindung.

Eine Lichtquelle 1 erzeugt einen Lichtstrahl 2, der durch einen Eintrittsspalt 3 zu einem Gitter 4 geführt wird, das ihn spektral dispergiert. Durch die Gitterdispersion wird die Ebene definiert. In dieser Ebene liegen der einfallende Strahl und die von Gitter kommenden Strahlen.

Als Lichtquelle kann eine der in der Spektralphotometrie üblichen Lichtquellen, wie beispielsweise Halogenlampen, Xenonlampen, Hohlkathodenröhren, etc. mit kontinuierlicher oder repetierender blitzförmiger Lichtaussendung eingesetzt werden.

Die vom Gitter 4 kommenden Lichstrahlen 5 gelangen zu einem Austrittsspalt 6, der nur einen eng begrenzten Bereich des spektral dispergierten Lichts durchlässt.

Eintrittsspalt 3 und Austrittsspalt 6 bilden zusammen mit dem Gitter 4 einen sogenannten Gittermonochromator. Als Gitter können alle üblicherweise in der Spektralphotometrie verwendeten Gitter, wie beispielsweise holographische Gitter etc., eingesetzt werden.

Vom Austrittsspalt 6 des Gittermonochromators gelangt der durchgelassene Strahl zu einem Strahlteiler 7. Der Strahlteiler 7 wird durch einen halbdurchlässigen Spiegel oder einen Strahlzerhacker mit Strahlumlenkung gebildet. Seine reflektierende Fläche ist wie üblich um einen in der Dispersions-Ebene liegenden Winkel α/2 bezüglich der optischen Achse gedreht, um eine Ablenkung eines Referenzstrahls 11 um einen Winkel α zu erzielen. Erfindungsgemäß ist die reflektierende Fläche des Strahlteilers 7 im Unterschied zu bekannten Spektralphotometern so um einen Winkel β/2 geneigt, dass der reflektierte Anteil des Strahls um den Winkel β aus der Ebene herausgeführt wird.

Der Winkel α liegt üblicherweise bei etwa 90°. Für den Winkel β hat sich eine optimale Grösse von ca. 45° ergeben. Beide Winkel sind aber nicht kritisch, so dass auch grössere Abweichungen möglich sind.

Auf den Strahl 8, der sich hinter dem Strahlteiler geradlinig fortsetzt, hat diese Anordnung des Strahlenteilers keinen Einfluss. Der Strahl wird wie üblich durch eine Durchflusszelle 9 geführt und von einem Detektor 10 erfasst.

Der abgelenkte Referenzstrahl 11 hingegen wird aus der Ebene herausgeführt und durch einen Referenzdetektor 12, der um den entsprechenden Winkel aus der Einstrahlebene heraus versetzt angeordnet ist, erfasst.

Durch diese Anordnung des Strahlteilers 7 und des Referenzdetektors 12 werden die spektralen Intensitätsunterschiede gegenüber der herkömmlichen Strahlenführung erheblich reduziert. Diese Kompensation macht es möglich, dass in der anschliessenden elektronischen Signalverarbeitung die Korrektur wesentlich einfacher ist als sie bisher möglich war. Insgesamt wird die Basislinie des Geräts erheblich verbessert, sodass eine höhere Auflösung des Signals gewährleistet ist.

## Patentansprüche

1. Verfahren zur Spektralphotometrie, bei dem ein von einer Lichtquelle (1) kommender und in einem Monochromator (3, 4, 6) dispergierter Lichtstrahl durch einen Strahlteiler (7) in einen ersten, entlang der optischen Achse durch eine Messzelle (4) zu einem Detektor (10) geführten Messstrahl (8) und einen zweiten, in der durch die Dispersion gebildeten Ebene um einen Winkel α zur optischen Achse zu einem Referenzdetektor geführten Referenzstrahl (12) aufgeteilt wird, dadurch gekennzeichnet, dass die Ablenkung des Referenzstrahls (11) durch den Strahlteiler (7) zusätzlich um einen Winkel β aus der genannten Ebene heraus erfolgt.

2. Spektralphotometer zur Durchführung des Verfahrens nach Anspruch 1 mit einem Gittermonochromator (3, 4, 6) und einem Strahlteiler (7), der um einen in der Dispersionsebene liegenden Winkel $\alpha/2$ bezüglich der optischen Achse gedreht ist, dadurch gekennzeichnet, dass der Strahlteiler (7) zusätzlich um einen Winkel $\beta/2$ gegenüber der zur genannten Ebene senkrechten Richtung geneigt ist.

3. Spektralphotometer, dadurch gekennzeichnet, dass $\alpha = 90°$ und $\beta = 45°$.

## Claims

1. A spectrophotometric method, in which a beam of light coming from a light source (1) and dispersed in a monochromator (3, 4, 6) is divided up by a beam splitter (7) into a first measuring beam (8) which is passed along the optical axis through a measuring cell (9) to a detector (10), and a second reference beam (12) which, in the plane formed by the dispersion, is passed to a reference detector through an angle $\alpha$ to the optical axis, characterised in that the reference beam (11) is additionally by the beam splitter out of said plane through an angle $\beta$.

2. A spectrophotometer for performing the method according to claim 1, comprising a grating monochromator (3, 4, 6) and a beam splitter (7) which with respect to the optical axis is turned through an angle $\alpha/2$ lying in the dispersion plane, characterised in that the beam splitter (7) is additionally inclined by an angle $\beta/2$ to the direction perpendicular to the said plane.

3. A spectrophotometer, characterised in that $\alpha = 90°$ and $\beta = 45°$.

## Revendications

1. Procédé de spectrophotométrie, dans lequel un rayon lumineux provenant d'une source lumineuse (1) est dispersé dans un monochromateur (3, 4, 6) et divisé par une lame séparatrice (7) en un premier rayon (8) de mesure guidé le long de l'axe optique par une cellule de mesure (9) vers un détecteur (10) et en un deuxième rayon de référence (12) dévié dans le plan créé par la dispersion d'un angle $\alpha$ par rapport à l'axe optique vers un détecteur de référence, caractérisé en ce que le rayon de référence (11) est de plus dévié par la lame séparatrice (7) d'un angle $\beta$ en dehors du plan nommé.

2. Spectrophotomètre pour la mise en œuvre du procédé selon la revendication 1 avec un monochromateur (3, 4, 6) à grille et une lame séparatrice (7) qui est tournée par rapport à l'axe optique d'un angle $\alpha/2$ situé dans le plan de dispersion, caractérisé en ce que la lame séparatrice (7) est de plus inclinée d'un angle $\beta/2$ par rapport à la direction perpendiculaire au plan nommé.

3. Spectrophotomètre, caractérisé en ce qu'$\alpha = 90°$ et $\beta = 45°$.

EP 0 217 054 B1